# FASCICULE DE BREVET EUROPEEN

(11) **EP 2 580 797 B1**
(45) Date de publication et mention de la délivrance du brevet: **09.04.2014**
(21) Numéro de dépôt: 11726112.3
(22) Date de dépôt: 10.06.2011
(51) Int. Cl.: H01M 8/12, H01M 4/88, C25B 9/00, C25B 1/02, H01M 4/86, H01M 8/02

(54) **PROCEDE DE FABRICATION DE CELLULES ELECTROCHIMIQUES ELEMENTAIRES POUR SYSTEMES ELECTROCHIMIQUES PRODUCTEURS D'ENERGIE OU D'HYDROGENE, NOTAMMENT DU TYPE SOFC ET EHT**
VERFAHREN ZUR HERSTELLUNG EINFACHER ELEKTROCHEMISCHER ZELLEN FÜR ENERGIE- ODER WASSERSTOFFERZEUGENDE ELEKTROCHEMISCHE SYSTEME, INSBESONDERE VOM SOFC- UND HTE-TYP
METHOD FOR MANUFACTURING BASIC ELECTROCHEMICAL CELLS FOR ENERGY OR HYDROGEN-PRODUCING ELECTROCHEMICAL SYSTEMS, IN PARTICULAR OF THE SOFC AND HTE TYPE

(30) Priorité: 11.06.2010 FR 1054642
(43) Date de publication de la demande: 17.04.2013
(73) Titulaire: Commissariat à l'Énergie Atomique et aux Énergies Alternatives, 75015 Paris (FR)
(72) Inventeur: ALLEMAND, Alexandre, F-33000 Bordeaux (FR); BEAUDET SAVIGNAT, Sophie, F-37510 Ballan Mire (FR); BRUNETON, Eric, F-37000 Tours (FR)
(74) Mandataire: Ilgart, Jean-Christophe
(86) Numéro de dépôt international: PCT/EP2011/059660
(87) Numéro de publication internationale: WO 2011/154516

(56) Documents cités:
- EP-A1- 2 166 601
- WO-A1-2004/083147
- WO-A1-2009/099447
- JP-A- 6 135 721
- JP-A- 2000 277 127
- US-A- 5 922 486
- DAHL ET AL: "Densification and properties of zirconia prepared by three different sintering techniques", CERAMICS INTERNATIONAL, ELSEVIER, AMSTERDAM, NL, vol. 33, no. 8, 25 septembre 2007 (2007-09-25), pages 1603-1610, XP022268143, ISSN: 0272-8842, DOI: DOI:10.1016/J.CERAMINT.2006.07.005
- LIU B ET AL: "La0.9Sr0.1Ga0.8Mg0.2O3-delta sintered by spark plasma sintering (SPS) for intermediate temperature SOFC electrolyte", JOURNAL OF ALLOYS AND COMPOUNDS, ELSEVIER SEQUOIA, LAUSANNE, CH, vol. 458, no. 1-2, 30 juin 2008 (2008-06-30), pages 383-389, XP022647540, ISSN: 0925-8388, DOI: DOI:10.1016/J.JALLCOM.2007.03.126 [extrait le 2008-05-07]
- MUNIR Z A ET AL: "The effect of electric field and pressure on the synthesis and consolidation of materials: A review of the spark plasma sintering method", JOURNAL OF MATERIALS SCIENCE, KLUWER ACADEMIC PUBLISHERS, BO, vol. 41, no. 3, 1 février 2006 (2006-02-01), pages 763-777, XP019399486, ISSN: 1573-4803, DOI: DOI:10.1007/S10853-006-6555-2

## Description

### DOMAINE TECHNIQUE

La présente invention se rapporte au domaine des systèmes électrochimiques producteurs d'énergie ou d'hydrogène et, notamment, au domaine des piles à combustible dites à oxyde solide, plus simplement appelées SOFC (pour « **S**olid **O**xide **F**uel **C**ell ») et des électrolyseurs haute température, plus simplement appelés EHT.

Elle a trait plus spécifiquement à un procédé permettant de fabriquer des cellules électro-chimiques élémentaires, propres à entrer dans la constitution de systèmes électrochimiques producteurs d'énergie ou d'hydrogène et, notamment, de SOFC et d'EHT.

### ÉTAT DE LA TECHNIQUE ANTÉRIEURE

Les SOFC sont des systèmes électrochimiques producteurs d'énergie électrique et thermique qui utilisent l'énergie chimique générée par la réaction de formation d'eau à partir de l'hydrogène et de l'oxygène.

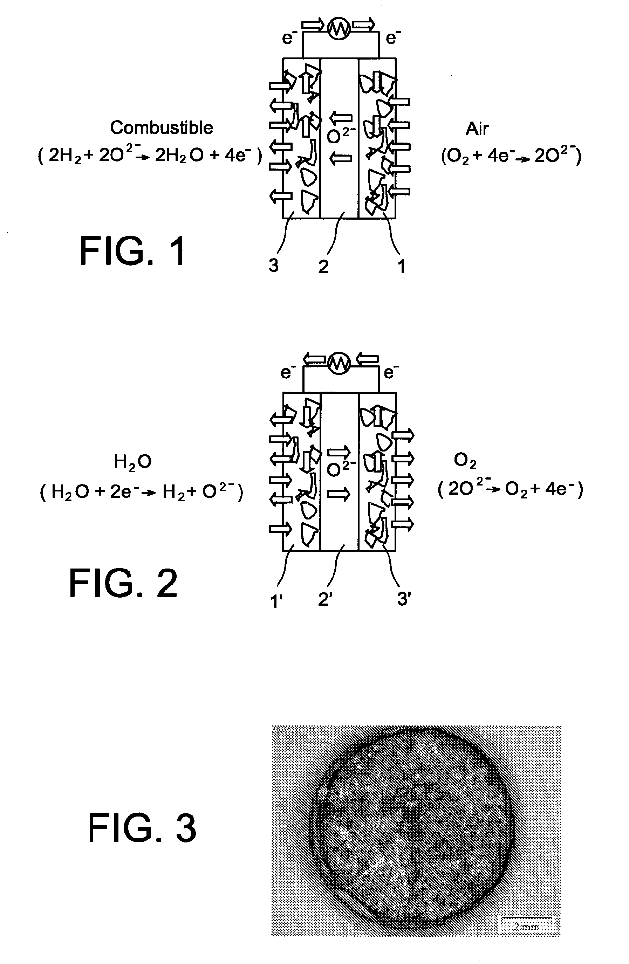

Comme visible sur la figure 1 jointe en annexe, le principe de fonctionnement d'une cellule élémentaire (ou coeur de pile) 5 d'une SOFC est basé sur le mécanisme suivant : l'oxygène de l'air, qui est apporté à la cathode 1, est dissocié pour donner des anions O²⁻. Les anions ainsi formés migrent à travers l'électrolyte 2 jusqu'à atteindre l'anode 3 au niveau de laquelle ils oxydent les atomes d'hydrogène qui sont apportés par le combustible. Cette réaction libère des électrons et de l'eau.

Les EHT sont des systèmes électrochimiques producteurs, eux, d'hydrogène dont le principe de fonctionnement est strictement inverse à celui des SOFC.

En effet, comme visible sur la figure 2 jointe en annexe, dans le cas d'une cellule élémentaire 5' d'un EHT, de la vapeur d'eau est apportée à la cathode l' et les molécules d'eau sont dissociées en hydrogène et en anions O²⁻. Les anions ainsi formés diffusent à travers l'électrolyte 2' pour se recombiner sous forme d'oxygène à l'anode 3' tandis que l'hydrogène reste, avec la vapeur d'eau, à la cathode. Cet hydrogène peut ensuite être récupéré pour être utilisé comme combustible dans d'autres applications.

Actuellement, dans les SOFC et les EHT, les électrodes sont constituées de céramiques ou de cermets poreux à conduction électronique ou mixte électronique/ ionique tandis que l'électrolyte est constitué d'une céramique dense à conduction ionique pure, qui est typiquement une zircone dopée à l'oxyde d'yttrium.

Aussi, l'une des spécificités des SOFC et des EHT réside dans leurs hautes températures de fonctionnement, qui sont situées dans la gamme de 700°C à 900°C et qui sont nécessaires à l'établissement d'une conductivité ionique satisfaisante de l'électrolyte céramique.

Les SOFC permettent l'utilisation d'une grande variété de combustibles dont de nombreux hydrocarbures qui sont susceptibles de former de l'hydrogène, ce dernier étant formé soit directement au sein de l'anode, auquel cas on parle de reformage direct, soit à l'extérieur du coeur de pile via un reformeur externe, auquel cas on parle de reformage indirect.

Les SOFC sont, parmi tous les systèmes connus de production électrique, ceux qui présentent les rendements les plus élevés pour un minimum d'émissions polluantes et de gaz à effet de serre.

Ces performances rendent leur utilisation particulièrement attractive pour la fourniture stationnaire d'énergie dans des domaines de puissance allant du kilowatt à la centaine de mégawatts. Toutefois, l'utilisation des SOFC dans le domaine des auxiliaires de puissance (ou APU pour « **A**uxiliary **P**ower Unit »), par exemple pour le secteur automobile, les véhicules industriels et l'avionique, fait également l'objet d'études.

Il se trouve qu'en dépit de leurs avantages, les SOFC ne sont pas encore commercialisées et ce, notamment à cause de leurs coûts de fabrication et de fonctionnement qui se traduisent par un prix de revient rédhibitoire du kilowatt électrique produit.

Dans le cas des EHT, le combustible utilisé est principalement la vapeur d'eau à laquelle on ajoute une faible quantité d'hydrogène de manière à limiter le plus possible l'oxydation du métal présent dans le cermet constitutif de l'anode.

Les avantages présentés par les EHT sont, en termes de rendements de production et d'absence d'impact sur l'environnement, similaires à ceux des SOFC mais leur développement commercial se heurte également à un certain nombre de problèmes dont des problèmes de coûts de fabrication et de fonctionnement.

Différentes stratégies peuvent être adoptées pour réduire les coûts de fabrication et de fonctionnement des SOFC et des EHT comme l'utilisation de matériaux d'électrodes et d'électrolyte moins onéreux que ceux utilisés jusqu'à présent, l'emploi de matériaux d'électrolyte autorisant un fonctionnement des SOFC et des EHT à des températures inférieures à celles utilisées actuellement, le développement de procédés permettant une production de masse de ces systèmes électrochimiques à bas coûts, etc.

A ce jour, deux principales géométries ont été proposées pour les SOFC et les EHT. La première prévoit de disposer les électrodes et l'électrolyte d'une cellule élémentaire en couches superposées autour d'un tube poreux et est donc dite tubulaire, tandis que la deuxième prévoit de disposer ces éléments sous la forme d'une superposition de couches planes et est donc dite planaire.

Ces géométries font appel à des procédés de fabrication différents mais qui ont en commun d'utiliser, pour la fabrication d'une seule et même cellule élémentaire, plusieurs types de technique telles que l'extrusion, le pressage isostatique, la projection plasma, le dépôt en phase liquide (à partir de barbotines) du type sérigraphie, trempage-retrait ou projection pneumatique, le dépôt en phase vapeur du type pyrolyse par pulvérisation, le coulage en bande, le coulage en barbotine ou encore l'électrophorèse, et de requérir un minimum de deux voire trois frittages à des températures élevées, généralement supérieures à 1000°C, par cellule élémentaire.

Or, outre que ces procédés sont complexes à mettre en oeuvre, les frittages qu'ils nécessitent sont particulièrement consommateurs de temps (il faut, en effet, compter une journée au moins pour chaque frittage), d'énergie (compte-tenu des températures utilisées) et d'équipements et, de ce fait, contribuent grandement à alourdir les coûts de fabrication des SOFC et des EHT. Le document FR2880199 décrit la fabrication d'une cellule élémentaire de pile à combustible avec dépôt de couches de poudre de matériaux d'électrode et d'électrolyte et solidification partielle par frittage laser entre chaque dépôt de poudre.

Les Inventeurs se sont donc fixé pour but de fournir un procédé qui permette, d'une manière générale, de fabriquer des cellules électrochimiques élémentaires, propres à entrer dans la constitution de systèmes électrochimiques du type SOFC et EHT, de manière beaucoup plus simple, plus rapide et moins coûteuse que les procédés proposés jusqu'à présent pour la fabrication de telles cellules.

### EXPOSÉ DE L'INVENTION

Ce but et d'autres encore sont atteints par l'invention qui propose un procédé de fabrication d'au moins une cellule électrochimique élémentaire, comprenant une première et une deuxième électrode entre lesquelles est intercalé un électrolyte, lesdites première et deuxième électrodes et ledit électrolyte se présentant sous la forme de couches, lequel procédé comprend :
a) la réalisation d'au moins une structure comprenant une couche d'une poudre d'un premier matériau d'électrode et une couche d'une poudre d'un deuxième matériau d'électrode entre lesquelles est intercalée une couche d'une poudre d'un matériau d'électrolyte ; et
b) le frittage simultané de toutes les couches de poudres par un frittage sous champ électrique.

Ainsi, selon l'invention, on utilise les matériaux destinés à constituer les électrodes et l'électrolyte d'une cellule électrochimique élémentaire sous la forme de poudres, que l'on dispose de sorte à former un tricouche de poudres dans lequel la poudre du matériau d'électrolyte est intercalée entre les poudres des matériaux d'électrodes, puis on réalise le frittage de toutes ces poudres en une seule étape par un frittage sous champ électrique.

Dans ce qui précède et ce qui suit, on entend par « frittage sous champ électrique », un frittage dans lequel le(s) matériau(x) à densifier est (sont) soumis à une pression uniaxiale dans une matrice - exactement comme dans un frittage sous charge uniaxiale - mais dans lequel la matrice, qui est constituée d'un matériau électriquement conducteur, typiquement du graphite, est traversée par un courant électrique de forte intensité.

Il en résulte que le frittage sous champ électrique permet de densifier en des temps très courts des matériaux très réfractaires tels que les céramiques et les composites céramique-métal.

Dans le cadre de l'invention, on préfère que le frittage soit réalisé par la technique connue sous les sigles SPS (pour « **S**park **P**lasma **S**intering »), FAST (pour « **F**ield **A**ctivated **S**intering **T**echnique ») et PECS (pour « **P**ulsed **E**lectric **C**urrent **S**intering ») et dans laquelle le champ électrique utilisé est un champ pulsé.

Toutefois, il est également possible de réaliser le frittage par une technique de frittage dans laquelle le champ électrique, qui est appliqué à la matrice, est autre qu'un champ pulsé, par exemple un champ alternatif.

Dans le cadre de l'invention, les premier et deuxième matériaux d'électrodes sont, de préférence, choisis parmi les céramiques à conduction électronique et, mieux encore, à conduction mixte électronique/ ionique tandis que le matériau d'électrolyte est, lui, de préférence choisi parmi les céramiques à conduction exclusivement ionique.

Ainsi, ces matériaux peuvent notamment être :
- pour l'électrode destinée à servir d'électrode positive dans la cellule électrochimique élémentaire : un oxyde de structure pérovskite à base de lanthane tel qu'une manganite de lanthane de formule La₁₋ₓAₓMnO₃ dans laquelle A représente le strontium, le calcium ou le fer, comme, par exemple, La₁₋ₓSrₓMnO₃ (avec x typiquement compris entre 0,2 et 0,3), notée LSM, une ferrite de lanthane de formule La₁₋ₓSrₓFeO₃ comme, par exemple, La_{0,8}Sr_{0,2}FeO₃, notée LSF, une cobaltite de lanthane de formule La₁₋ₓAₓCoO₃ dans laquelle A représente le strontium ou le baryum comme, par exemple, La₀,₆Sr_{0,4}CoO₃, notée LSCO ou une cobalto-manganite de formule LaMn₁₋ₓCoₓO₃ ; ou bien un nickelate ou un cuprate de formule A₂MO_{4+δ} dans laquelle A représente le lanthane, le praséodyme ou le néodyme tandis que M représente le nickel ou le cuivre ; ou bien encore La₁₋ₓSrₓFe_{1-y}CO_{y}O₃, notée LSCF.
- pour l'électrode destinée à servir d'électrode négative dans la cellule électrochimique élémentaire : un cermet métal/oxyde tel qu'un cermet de nickel et de zircone dopée à l'oxyde d'yttrium, noté NiO-YSZ, un cermet de nickel et de cérine dopée au gadolinium, noté NiO-CGO, un cermet de nickel et de cérine dopée au samarium, noté NiO-SDC, un cermet de cuivre et de zircone dopée à l'oxyde d'yttrium ou un cermet de cuivre et de cérine dopée à l'oxyde d'yttrium ; ou bien un composite à base de cérine comme, par exemple, CGO-YSZ-Cu ; un titanate comme, par exemple, La₄Srₙ₋₄TiₙO₃ₙ₊₂ ; ou encore un chromite de lanthane comme, par exemple, La₁₋ₓSrₓCr_{1-y}Mn_{y}O₃, noté LSCM, ou La_{1-x-y}CeₓSr_{y}Cr_{1-z}Mn_{z}O₃ ; et
- pour l'électrolyte, par exemple pour SOFC ou EHT : un mélange d'oxydes du type MO₂-M'O₃ où M représente le zirconium ou le cérium tandis que M' représente l'yttrium ou le scandium ou un élément du groupe des lanthanides comme, par exemple, une zircone dopée à l'oxyde d'yttrium, notée YSZ (ZrO₂ + 4-10% molaire de Y₂O₃) ; une cérine de formule Ce₁₋ₓMₓO_{2-δ} dans laquelle M représente le samarium, le gadolinium ou l'yttrium comme, par exemple, la cérine dopée au gadolinium Ce_{0,8}Gd_{0,2}O_{1,9}, notée CGO ; un oxyde de structure pérovskite basé sur LaGaO₃ et dans lequel le lanthane peut être partiellement substitué par le strontium, le calcium ou le baryum tandis que le gallium peut être partiellement substitué par le magnésium et/ou le cobalt ou le fer comme, par exemple, le gallate de lanthane La_{0,9}Sr_{0,1}Ga_{0,8}Mg_{0,2}O_{3-δ}, noté LSGM ; ou encore une apatite de formule La₁₀₋ₓAₓ(Si_{1-y}B_{y}O₄)₆O_{2±δ} dans laquelle A représente le strontium, le calcium, le baryum, etc, tandis que B représente l'aluminium, le germanium, le magnésium, etc.

Parmi les matériaux précités, on préfère tout particulièrement utiliser LSM pour l'électrode destinée à servir d'électrode positive dans la cellule électrochimique élémentaire, NiO-YSZ ou NiO-CGO pour l'électrode destinée à servir d'électrode négative dans la cellule électrochimique élémentaire, et YSZ pour l'électrolyte.

Dans la mesure où il est souhaitable qu'à l'issue du frittage, les électrodes présentent une certaine porosité alors que l'électrolyte doit, au contraire, être le plus dense possible, les poudres des premier et deuxième matériaux d'électrodes utilisées à l'étape a) peuvent avantageusement contenir un ou plusieurs agents porogènes décomposables par la chaleur, par exemple du type fécule de pomme de terre ou amidon de maïs, de riz ou de blé, qui, en perdant leur intégrité structurelle au cours de l'étape b), vont permettre d'ajuster le degré de porosité des électrodes en fonction des conditions (température, pression, durée, etc) dans lesquelles l'étape b) est réalisée.

Conformément à l'invention, la structure réalisée à l'étape a) peut comprendre de plus deux couches d'un matériau d'interconnexion que l'on répartit de part et d'autre des couches de poudres des premier et deuxième matériaux d'électrodes. Ce matériau d'interconnexion, qui peut notamment être un alliage métallique comme, par exemple, un alliage à base de fer et de chrome ou à base de nickel et de chrome, ou une céramique comme, par exemple, un chromite de lanthane, peut se présenter sous la forme d'une poudre et être densifié au cours de l'étape b), conjointement avec les premier et deuxième matériaux d'électrodes et le matériau d'électrolyte.

On obtient ainsi, à l'issue de l'étape b), ce que l'on appelle classiquement une SRU (pour « **S**ingle **R**epeat **U**nit »), c'est-à-dire une unité qui comprend une cellule électrochimique élémentaire prise en sandwich entre deux éléments d'interconnexion solidaires de cette cellule, ce qui permet de faire l'économie d'opérations consistant à assembler la cellule électrochimique élémentaire avec des éléments d'interconnexion, voire à fabriquer ces éléments d'interconnexion.

Le procédé selon l'invention peut être utilisé pour ne fabriquer qu'une seule cellule électrochimique élémentaire ou qu'une seule SRU à la fois.

Toutefois, et c'est l'un des grands avantages de ce procédé, il peut également être mis à profit pour fabriquer simultanément plusieurs cellules électrochimiques élémentaires ou plusieurs SRU, auquel cas l'étape a) comprend, de préférence, la réalisation d'une pluralité de structures telles que précédemment définies, que l'on superpose les unes sur les autres tout en les séparant les unes des autres par un élément séparateur dont la nature est choisie en fonction de ce que l'on souhaite fabriquer.

Ainsi, par exemple, dans le cas où l'on souhaite fabriquer simultanément une pluralité de cellules électrochimiques élémentaires ou de SRU qui sont destinées à être utilisées indépendamment les unes des autres à l'issue de leur fabrication, alors l'élément séparateur est, de préférence, une couche d'un matériau de nature à permettre la séparation de ces cellules ou SRU après l'étape b) comme, par exemple, une feuille de graphite dont les deux faces sont avantageusement recouvertes d'une barrière de diffusion au carbone, de manière à éviter que du carbone ne diffuse, pendant l'étape b), dans les cellules électro-chimiques élémentaires ou les SRU à partir de la feuille de graphite.

Des feuilles de graphite susceptibles d'être utilisées sont, par exemple, les feuilles de graphite flexibles qui sont commercialisées par le groupe Carbone Lorraine sous la référence Papyex^{™} et qui sont classiquement employées pour chemiser les matrices utilisées dans les techniques de frittage sous champ électrique, tandis que la barrière de diffusion au carbone peut, par exemple, être du nitrure de bore.

Par contre, dans le cas où l'on souhaite fabriquer simultanément une pluralité de SRU qui sont destinées à être utilisées dans un seul et même système électrochimique à l'issue de leur fabrication, alors l'élément séparateur est, de préférence, une couche d'un matériau d'interconnexion tel que précédemment défini, ce qui permet, là également, de faire l'économie d'opérations consistant à connecter les SRU les unes aux autres, voire à fabriquer les éléments d'interconnexion destinés à entrer dans la constitution de ces SRU.

Dans tous les cas, l'étape b) est, elle, inchangée.

Conformément à l'invention, on préfère que les épaisseurs des électrodes et de l'électrolyte de la ou de chaque cellule électrochimique élémentaire soient les suivantes :
- dans le cas où le support mécanique de la ou des cellules électrochimiques élémentaires est prévu pour être assuré par l'une des électrodes : de 300 µm à 1 mm pour l'électrode support, de 5 à 50 µm pour l'électrolyte et de 20 à 100 µm et, mieux encore, de 40 à 60 µm pour l'autre électrode ; et
- dans le cas où le support mécanique de la ou des cellules électrochimiques élémentaires est prévu pour être assuré par l'électrolyte : de 100 à 300 µm pour l'électrolyte support et de 20 à 100 µm et, mieux encore, de 40 à 60 µm pour chacune des électrodes.

Les épaisseurs des couches de poudres qui forment la structure à l'étape a), sont donc, de préférence, choisies de manière à obtenir de telles épaisseurs en tenant compte d'une éventuelle tendance que peuvent présenter ces couches de poudres à se rétracter au cours du frittage de l'étape b).

Dans le cadre de l'invention, la ou les cellules électrochimiques élémentaires sont, de préférence, à géométrie plane, cette géométrie conduisant généralement à des systèmes électrochimiques plus performants, notamment en termes de puissance spécifique, que la géométrie tubulaire.

Toutefois, il est bien évident que le procédé selon l'invention peut également s'appliquer à la fabrication de cellules électrochimiques élémentaires à géométrie tubulaire.

Par ailleurs, la ou les cellules électrochimiques élémentaires sont, de préférence, des cellules de systèmes électrochimiques producteurs d'énergie ou d'hydrogène et, en particulier, de SOFC ou d'EHT.

En plus des avantages déjà mentionnés, le procédé selon l'invention présente celui d'offrir la possibilité de fabriquer des cellules électrochimiques s'inscrivant dans une large gamme de dimensions, pouvant aller notamment de quelques millimètres carrés à plus d'une centaine de centimètres carrés, par exemple 150 cm², de superficie, ainsi que de compositions.

En outre, dans la mesure où il conduit à l'obtention de cellules électrochimiques élémentaires dans lesquelles les électrodes et électrolytes présentent des microstructures à grains plus fins que celles présentées par les électrodes et électrolytes des cellules obtenues par les procédés de l'état de l'art - ce qui devrait notamment se traduire par une amélioration de la conductivité ionique et des propriétés mécaniques des électrolytes et, donc, autoriser une réduction de l'épaisseur de ces électrolytes -, le procédé selon l'invention permet aussi d'envisager une augmentation significative des performances des systèmes électrochimiques qui seront fabriqués à partir de ces cellules. La réduction de la taille des grains est une conséquence du temps de frittage très court (de l'ordre de quelques minutes pour obtenir un matériau dense) eu égard aux autres procédés de fabrication couramment rencontrés dans la littérature.

D'autres caractéristiques et avantages de l'invention ressortiront du complément de description qui suit, qui se rapporte à un exemple de mise en oeuvre du procédé selon l'invention pour la fabrication de cellules électrochimiques élémentaires propres à entrer dans la constitution de SOFC ou d'EHT, et qui se réfère aux figures annexées.

Bien entendu, ce complément de description n'est donné qu'à titre d'illustration de l'objet de l'invention et ne constitue en aucun cas une limitation de cet objet.

### BRÈVE DESCRIPTION DES FIGURES

La figure 1, déjà commentée, est une illustration schématique du principe de fonctionnement d'une cellule élémentaire d'une SOFC.
La figure 2, déjà commentée, est une illustration schématique du principe de fonctionnement d'une cellule élémentaire d'un EHT.
La figure 3 est une photographie d'une cellule électrochimique élémentaire ayant été fabriquée par le procédé selon l'invention, qui montre cette cellule vue de dessus.
Les figures 4A et 4B sont des photographies prises au microscope électronique à balayage de tranches polies d'une cellule électrochimique élémentaire ayant été fabriquée par le procédé selon l'invention, de composition LSM/YSZ/NiO-CGO, qui montrent respectivement la jonction entre les couches de LSM et d'YSZ (figure 4A) et la jonction entre les couches d'YSZ et de NiO-CGO (figure 4B).
Les figures 5A et 5B sont des photographies prises au microscope électronique à balayage de tranches polies d'une cellule électrochimique élémentaire ayant été fabriquée par le procédé selon l'invention, de composition LSM/YSZ/NiO-YSZ, qui montrent respectivement la jonction entre les couches de LSM et d'YSZ (figure 5A) et la jonction entre les couches d'YSZ et de NiO-YSZ (figure 5B).
Les figures 6A, 6B et 6C sont les spectres obtenus par spectroscopie d'énergie dispersive des photons X pour les couches de LSM (figure 6A), D'YSZ (figure 6B) et de NiO-CGO (figure 6C) de la cellule électrochimique élémentaire dont les tranches sont montrées sur les figures 4A et 4B.
Les figures 7A, 7B et 7C sont les spectres obtenus par spectroscopie d'énergie dispersive des photons X pour les couches de LSM (figure 7A), d'YSZ (figure 7B) et de NiO-YSZ (figure 7C) de la cellule électrochimique élémentaire dont les tranches sont montrées sur les figures 5A et 5B.

### EXPOSÉ DÉTAILLÉ D'UN MODE DE MISE EN OEUVRE PARTICULIER

On réalise une série de cellules électro-chimiques élémentaires planaires par le procédé selon l'invention.

Ces cellules mesurent 8 mm de diamètre et sont constituées chacune d'un empilement comprenant successivement :
- une couche de LSM, d'environ 50 µm d'épaisseur, en tant que premier matériau d'électrode ;
- une couche d'YSZ, d'environ 150 µm d'épaisseur, en tant que matériau d'électrolyte ; et
- une couche de NiO-YSZ ou de NiO-CGO, d'environ 50 µm d'épaisseur, en tant que deuxième matériau d'électrode.

Chaque cellule est réalisée en déposant dans une pastilleuse en graphite de diamètre interne égal à 8 mm, préalablement chemisée d'une feuille de graphite (Papyex^{™}) recouverte de nitrure de bore, une couche de poudre de LSM (correspondant à 0,0097 g de poudre pour une porosité de 40% après frittage), puis une couche de poudre d'YSZ (correspondant à 0,0433 g de poudre pour une porosité de 40% après frittage) et, enfin, une couche de poudre de NiO-YSZ (correspondant à 0,0099 g de poudre pour une porosité de 40% après frittage) ou de NiO-CGO (correspondant à 0,0104 g de poudre pour une porosité de 40% après frittage), et en soumettant ensuite la structure ainsi formée à un frittage sous champ électrique pulsé au moyen d'un appareil de SPS de marque Sumitomo, modèle 2080 Dr Sinter.

Ce frittage est réalisé dans les conditions suivantes :
- champ électrique : utilisation de trains de 8 impulsions (ou pulses) de 3,3 ms de durée, séparés les uns des autres par 2 périodes de 3,3 ms sans courant ;
- température : montée en température de 300 à 600°C en 3 minutes, puis montée en température de 600 à 1200°C en 14 minutes, puis maintien de la température à 1200°C pendant 5 minutes, puis refroidissement lent dû à l'inertie thermique du système ;
- pression : montée en pression de 0 à 25 MPa en 3 minutes, puis maintien de la pression à 25 MPa pendant 19 minutes, avant arrêt du maintien en pression.

A l'issue du frittage, les cellules électrochimiques élémentaires ainsi obtenues sont soumises à des examens microscopiques ainsi qu'à des analyses élémentaires par spectroscopie d'énergie dispersive des photons X (ou EDS pour « **E**nergie **D**ispersive X-ray **S**pectrometry »).

Comme le montre la figure 3 qui est une photographie d'une cellule électrochimique élémentaire, vue de dessus, cette dernière est parfaitement intègre d'un point de vue mécanique.

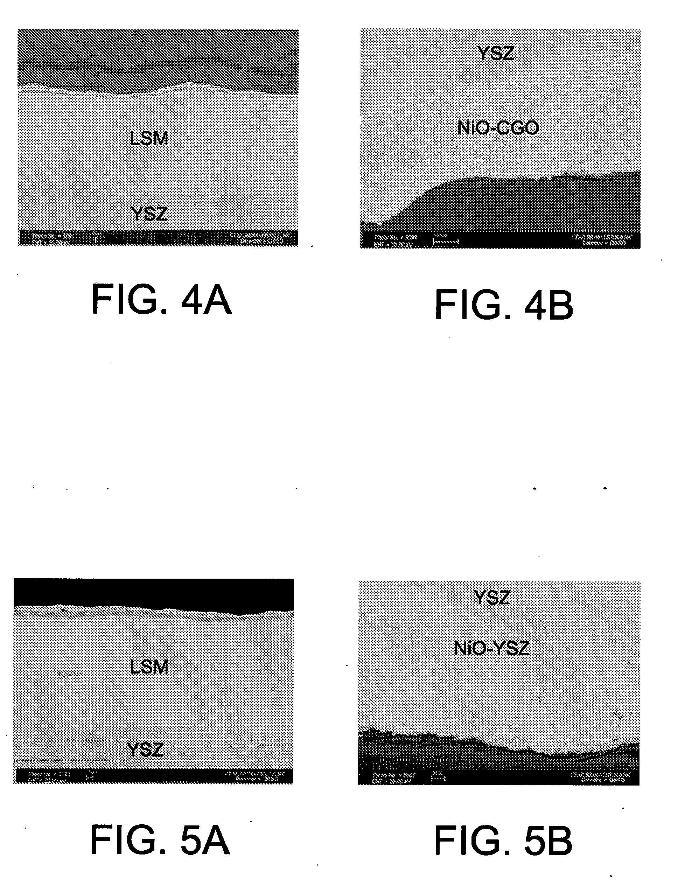

Par ailleurs, comme le montrent les figures 4A, 4B, 5A et 5B, qui correspondent à des photographies prises au MEB de tranches polies de deux cellules, l'une de composition LSM/YSZ/NiO-CGO (figures 4A et 4B) et l'autre, de composition LSM/YSZ/NiO-YSZ (figures 5A et 5B), les cellules électrochimiques élémentaires obtenues par le procédé selon l'invention présentent une bonne densité et sont formées d'un empilement compact de couches qui ont bien adhéré les unes aux autres sous l'effet du frittage.

En effet, on n'observe pratiquement aucun défaut d'adhérence et les interfaces entre les couches sont nettes et sans délamination. Les interfaces sont irrégulières. Cependant, ce point n'est pas critique pour le bon fonctionnement d'une cellule électrochimique élémentaire.

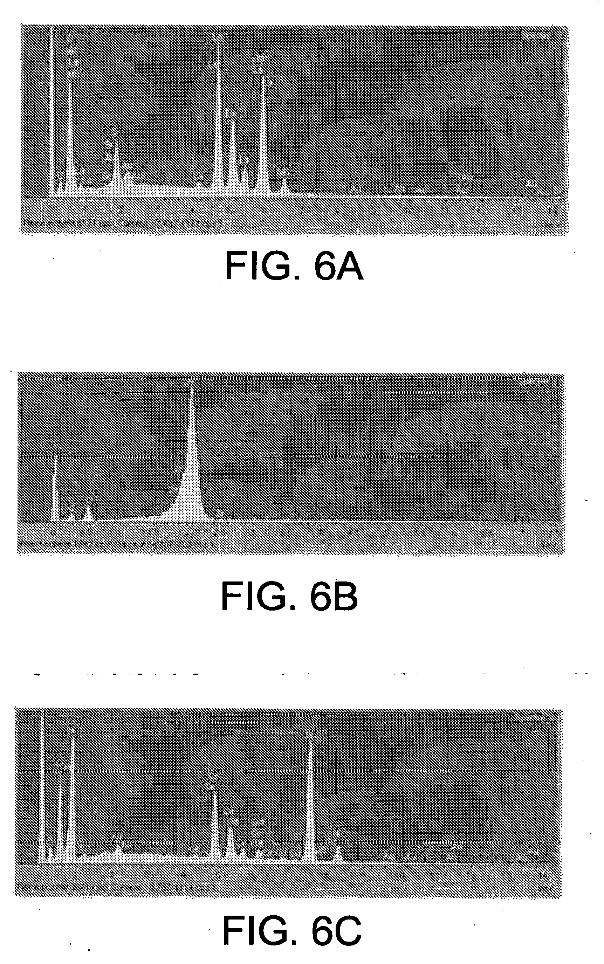

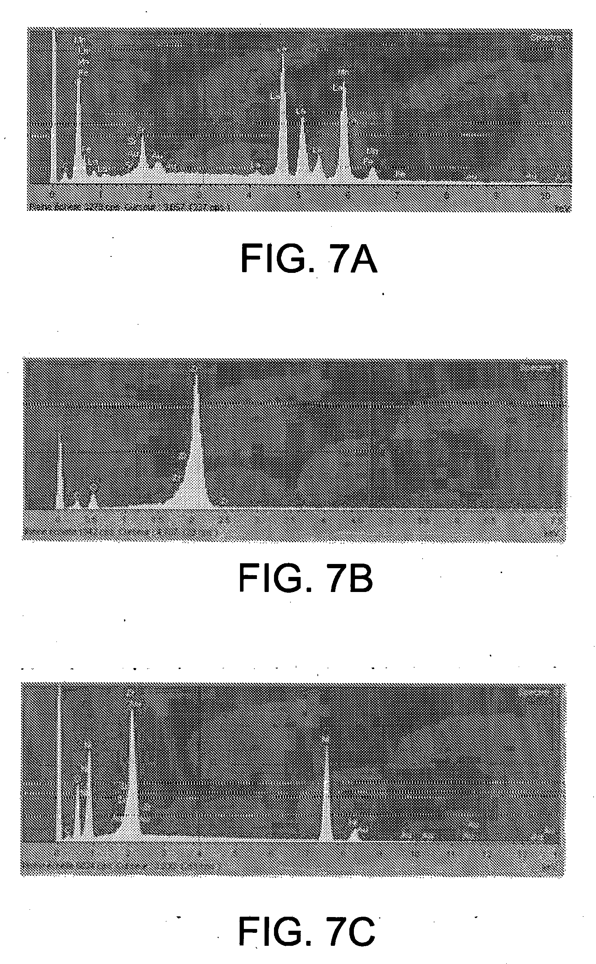

Enfin, comme le montrent les figures 6A à 6C, ainsi que les figures 7A à 7C, les couches formées ont bien la composition attendue.

Ainsi, les spectres EDS représentés sur les figures 6A et 6B indiquent une composition conforme à la composition souhaitée pour une couche de LSM ; ceux représentés sur les figures 7A et 7B indiquent une composition conforme à la composition souhaitée pour une couche d'YSZ ; le spectre représenté sur la figure 6C indique une composition conforme à la composition souhaitée pour une couche de NiO-CGO tandis que le spectre représenté sur la figure 7C indique une composition conforme à la composition souhaitée pour une couche de NiO-YSZ.

## Revendications

1. Procédé de fabrication d'au moins une cellule électrochimique élémentaire, comprenant une première et une deuxième électrode entre lesquelles est intercalé un électrolyte, lesdites première et deuxième électrodes et ledit électrolyte se présentant sous la forme de couches, lequel procédé est **caractérisé en ce qu'**il comprend :
a) la réalisation d'au moins une structure comprenant une couche d'une poudre d'un premier matériau d'électrode et une couche d'une poudre d'un deuxième matériau d'électrode entre lesquelles est intercalée une couche d'une poudre d'un matériau d'électrolyte ; et
b) le frittage simultané de toutes les couches de poudres par un frittage sous champ électrique.

2. Procédé selon la revendication 1, **caractérisé en ce que** le champ électrique est un champ électrique pulsé.

3. Procédé selon la revendication 1 ou la revendication 2, **caractérisé en ce que** les premier et deuxième matériaux d'électrodes sont choisis parmi les céramiques à conduction électronique ou à conduction mixte électronique/ionique.

4. Procédé selon l'une quelconque des revendications précédentes, **caractérisé en ce que** le matériau d'électrolyte est choisi parmi les céramiques à conduction exclusivement ionique.

5. Procédé selon l'une quelconque des revendications précédentes, **caractérisé en ce que** les poudres des premier et deuxième matériaux d'électrodes contiennent un ou plusieurs agents porogènes décomposables à la chaleur.

6. Procédé selon l'une quelconque des revendications précédentes, **caractérisé en ce que** la structure réalisée à l'étape a) comprend de plus deux couches d'un matériau d'interconnexion qui sont réparties de part et d'autre des couches de poudres des premier et deuxième matériaux d'électrode.

7. Procédé selon la revendication 6, **caractérisé en ce que** le matériau d'interconnexion est choisi parmi les alliages métalliques et les céramiques.

8. Procédé selon la revendication 6 ou la revendication 7, **caractérisé en ce que** le matériau d'interconnexion est utilisé sous la forme d'une poudre.

9. Procédé selon l'une quelconque des revendications précédentes, **caractérisé en ce que** l'étape a) comprend la réalisation d'une pluralité de structures telles que précédemment définies, que l'on superpose les unes sur les autres tout en les séparant les unes des autres par un élément séparateur, l'étape b) étant, elle, inchangée.

10. Procédé selon la revendication 9, **caractérisé en ce que** l'élément séparateur est une feuille de graphite recouverte sur ses deux faces d'une barrière de diffusion au carbone.

11. Procédé selon la revendication 9, **caractérisé en ce que** l'élément séparateur est une couche d'un matériau d'interconnexion.

12. Procédé selon l'une quelconque des revendications précédentes, **caractérisé en ce que** la ou les cellules électrochimiques élémentaires sont à géométrie plane.

13. Procédé selon l'une quelconque des revendications précédentes, **caractérisé en ce que** la ou les cellules électrochimiques élémentaires sont des cellules de systèmes électrochimiques producteurs d'énergie ou d'hydrogène.

14. Procédé selon la revendication 13, **caractérisé en ce que** les systèmes électrochimiques producteurs d'énergie ou d'hydrogène sont des piles à combustible à oxyde solide ou des électrolyseurs haute température.

## Patentansprüche

1. Verfahren zur Herstellung wenigstens einer elektrochemischen Elementarzelle, eine erste und eine zweite Elektrode umfassend, zwischen denen sich ein Elektrolyt befindet, wobei die erste und die zweite Elektrode und der Elektrolyt sich in Form von Schichten präsentieren und das Verfahren dabei **dadurch gekennzeichnet ist, dass** es umfasst :
a) die Herstellung wenigstens einer Struktur, eine Schicht aus einem Pulver aus einem ersten Elektrodenmaterial und eine Schicht aus einem Pulver aus einem zweiten Elektrodenmaterial umfassend, zwischen denen sich eine Schicht aus einem Pulver eines Elektrolytenmaterials befindet ; und
b) die simultane Sinterung aller Pulverschichten durch eine Sinterung in einem elektrischen Feld.

2. Verfahren nach Anspruch 1, **dadurch gekennzeichnet, dass** das elektrische Feld ein gepulstes elektrisches Feld ist.

3. Verfahren nach Anspruch 1 oder Anspruch 2, **dadurch gekennzeichnet, dass** die Materialien der ersten und der zweiten Elektrode ausgewählt werden unter den Keramiken mit Elektronenleitfähigkeit oder Elektronen-lonen-Mischleitfähigkeit.

4. Verfahren nach einem der vorhergehenden Ansprüche, **dadurch gekennzeichnet, dass** das Elektrolytmaterial ausgewählt wird unter den Materialien mit ausschließlicher Ionenleitfähigkeit.

5. Verfahren nach einem der vorhergehenden Ansprüche, **dadurch gekennzeichnet, dass** die Pulver des ersten und zweiten Elektrodenmaterials ein oder mehrere wärmezersetzbare Quellmittel enthalten.

6. Verfahren nach einem der vorhergehenden Ansprüche, **dadurch gekennzeichnet, dass** die in Schritt a) realisierte Struktur zudem zwei Schichten eines Zusammenschaltungsmaterials umfasst, die auf beiden Seiten der Pulverschichten des ersten und zweiten Elektrodenmaterials verteilt sind.

7. Verfahren nach Anspruch 6, **dadurch gekennzeichnet, dass** das Zusammenschaltungsmaterial ausgewählt wird unter den metallischen und den keramischen Legierungen.

8. Verfahren nach Anspruch 6 oder Anspruch 7, **dadurch gekennzeichnet, dass** das Zusammenschaltungsmaterial in Form eines Pulvers verwendet wird.

9. Verfahren nach einem der vorhergehenden Ansprüche, **dadurch gekennzeichnet, dass** der Schritt a) die Realisierung einer Vielzahl von Strukturen, wie vorhergehend definiert, umfasst, die man einander überlagert und dabei durch ein Trennelement voneinander trennt, wobei der Schritt b) seinerseits unverändert bleibt.

10. Verfahren nach Anspruch 9, **dadurch gekennzeichnet, dass** das Trennelement eine auf ihren beiden Seiten mit einer Kohlenstoffdiffusionsbarriere überzogene Graphitfolie ist.

11. Verfahren nach Anspruch 9, **dadurch gekennzeichnet, dass** das Trennelement eine Schicht aus einem Zusammenschaltungsmaterial ist.

12. Verfahren nach einem der vorhergehenden Ansprüche, **dadurch gekennzeichnet, dass** die elektrochemische(n) Elementarzelle(n) eine ebene Geometrie aufweisen.

13. Verfahren nach einem der vorhergehenden Ansprüche, **dadurch gekennzeichnet, dass** die elektrochemische(n) Elementarzelle(n) eine Zelle bzw. Zellen von Energie oder Wasserstoff erzeugenden Systemen sind.

14. Verfahren nach Anspruch 13, **dadurch gekennzeichnet, dass** die energieoder wasserstofferzeugenden elektrochemischen Systeme Festoxid-Brennstoffzellen oder Hochtemperatur-Elektrolyseure sind.

## Claims

1. A process for manufacturing at least one elementary electrochemical cell, comprising a first and a second electrode between which an electrolyte is intercalated, said first and second electrodes and said electrolyte being in the form of layers, which process is **characterized in that** it comprises:
a) producing at least one structure comprising a layer of a powder of a first electrode material and a layer of a powder of a second electrode material between which a layer of a powder of an electrolyte material is intercalated ; and
b) simultaneously sintering all the powder layers by an electric field sintering.

2. The process according to claim 1, **characterized in that** the electric field is a pulsed electric field.

3. The process according to claim 1 or claim 2, **characterized in that** the first and second electrode materials are chosen from ceramics having an electronic conduction or a mixed electronic/ionic conduction.

4. The process according to any of the preceding claims, **characterized in that** the electrolyte material is chosen from the ceramics having an exclusively ionic conduction.

5. The process according to any of the preceding claims, **characterized in that** the powders of the first and second electrode materials contain one or more thermally decomposable pore-forming agents.

6. The process according to any of the preceding claims, **characterized in that** the structure obtained at step a) further comprises two layers of an interconnect material which are distributed either side of the powder layers of the first and second electrode materials.

7. The process according to claim 6, **characterized in that** the interconnect material is chosen from metal alloys and ceramics.

8. The process according to claim 6 or claim 7, **characterized in that** the interconnect material is used in the form of a powder.

9. The process according to any of the preceding claims, **characterized in that** step a) comprises the producing of a plurality of structures such as previously defined, which are stacked one on the other whilst separating them from each other by a separating element, step b) remaining unchanged.

10. The process according to claim 9, **characterized in that** the separating element is a graphite sheet coated on its two sides with a carbon diffusion barrier.

11. The process according to claim 9, **characterized in that** the separating element is a layer of an interconnect material.

12. The process according to any of the preceding claims, **characterized in that** the elementary electrochemical cell or cells have a planar geometry.

13. The process according to any of the preceding claims, **characterized in that** the elementary electrochemical cell or cells are cells of electrochemical systems producing energy or hydrogen.

14. The process according to claim 13, **characterized in that** the energy- or hydrogen-producing electrochemical systems are solid oxide fuel cells or high temperature electrolysers.
